# EUROPEAN PATENT SPECIFICATION

(11) **EP 4 388 278 B1**
(45) Date of publication and mention of the grant of the patent: **12.11.2025**
(21) Application number: 22769028.6
(22) Date of filing: 18.08.2022
(51) Int. Cl.: G01C 11/30, G06T 17/05, G06T 17/00, G06V 10/764, G06V 10/82, G06V 20/17, G06V 20/64

(54) **FACADE BIASING FOR REFLECTION CORRECTION IN PHOTOGRAMMETRIC RECONSTRUCTION**
FASSADENVORSPANNUNG ZUR REFLEXIONSKORREKTUR IN DER PHOTOGRAMMETRISCHEN REKONSTRUKTION
POLARISATION DE FAÇADE POUR CORRECTION DE RÉFLEXION DANS UNE RECONSTRUCTION PHOTOGRAMMÉTRIQUE

(30) Priority: 19.08.2021 NL 2028994
(43) Date of publication of application: 26.06.2024
(73) Proprietor: Microsoft Technology Licensing, LLC, Redmond, WA 98052 (US)
(72) Inventor: JONES, Michael William, Redmond, Washington 98052 (US); SCHÖNBERGER, Johannes Lutz, Redmond, Washington 98052 (US)
(74) Representative: Murgitroyd & Company
(86) International application number: PCT/US2022/040785
(87) International publication number: WO 2023/023266

(56) References cited:
- US-A1- 2013 060 540

## Description

### BACKGROUND

A common problem in the field of three-dimensional (3D) reconstruction is how to reconstruct non-Lambertian surfaces. Photogrammetric reconstruction is often based on matching corresponding points between two images taken from cameras with known orientations. When the cameras image a surface that is reflective, has moving features, or is featureless, it is not possible to accurately triangulate points on that surface. When creating 3D reconstructions of large buildings like skyscrapers, the reflections induced by the large windows causes the triangulation to fail and produce large holes in the sides of the buildings. Reference is made to US2013/0650540 which has been cited as relating to the state of the art.

### BRIEF SUMMARY

The present invention provides for a method for constructing structural models of a non-Lambertian feature according to claim 1.

The present invention also provides for a system according to claim 13.

Additional features and advantages will be set forth in the description which follows, and in part will be obvious from the description, or may be learned by the practice of the teachings herein. Features and advantages of the disclosure may be realized and obtained by means of the instruments and combinations particularly pointed out in the appended claims. Features of the present disclosure will become more fully apparent from the following description and appended claims or may be learned by the practice of the disclosure as set forth hereinafter.

### BRIEF DESCRIPTION OF THE DRAWINGS

In order to describe the manner in which the above-recited and other features of the disclosure can be obtained, a more particular description will be rendered by reference to specific implementations thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example implementations, the implementations will be described and explained with additional specificity and detail through the use of the accompanying drawings in which:
Figure 1A illustrates an existing solution for creating a 3D reconstruction of a building with holes in the facade of the building.
Figure 1B illustrates an image of a 3D reconstruction of a building in accordance with implementations of the present disclosure.
Figure 2A illustrates an existing solution for creating a 3D reconstruction of a body of water with added spikes or artifacts in the surface of the water.
Figure 2B illustrates an image of a 3D reconstruction of a body of water in accordance with implementations of the present disclosure.
Figure 3A illustrates an existing solution for creating a 3D reconstruction of a swimming pool with holes in the surface of the water.
Figure 3B illustrates an image of a 3D reconstruction of a swimming pool in accordance with implementations of the present disclosure.
Figure 4 illustrates an example environment for photogrammetric reconstruction of images with non-Lambertian surfaces in accordance with implementations of the present disclosure.
Figure 5 illustrates an example method for photogrammetric reconstruction of images with non-Lambertian surfaces in accordance with implementations of the present disclosure.
Figure 6 illustrates an example method for creating a modified observation volume of buildings for use with photogrammetric reconstruction of images in accordance with implementations of the present disclosure.
Figure 7 illustrates an example of creating an observation volume for a building in accordance with implementations of the present disclosure.
Figure 8 illustrates an example method for constructing structural models of a non-Lambertian feature in accordance with implementations of the present disclosure.
Figure 9 illustrates an example method for constructing structural models of a non-Lambertian feature in accordance with implementations of the present disclosure.

### DETAILED DESCRIPTION

This disclosure generally relates to 3D image reconstructions. A common problem in the field of three-dimensional (3D) reconstruction is how to reconstruct non-Lambertian surfaces. Non-Lambertian surfaces include surfaces that are reflective, have moving features, and/or are featureless. Photogrammetric reconstruction is often based on matching corresponding points between two images taken from cameras with known orientations. When the cameras image a surface that is reflective, has moving features, or is featureless, it is not possible to accurately triangulate points on that surface. When creating 3D reconstructions of buildings, the reflections induced by the large windows causes the triangulation to fail and produce large holes in the sides of the buildings. Moreover, water is often reconstructed as dense areas with huge spikes in the z-direction. Thus, large reflective surfaces are typically reconstructed poorly.

Different approaches have tried to fill the voids in the reconstructed buildings. One approach uses semantic segmentation of the input imagery and changes the reconstruction depending on what was imaged. The downside of this approach includes more imagery must be classified and potentially annotated to fix mistakes. Another approach uses machine learning for the entire fusion step. The downside of this approach is that a correct dataset of ground-truth voxels does not exist to train an appropriate machine learning model. Other approaches use 2.5D reconstruction for automatic processing of the buildings and water bodies. The 2.5D reconstruction worked for most man-made structures, however, anything with an undercutting appears distorted with a drape laid over the structure. In addition, spikes or other artifacts may be introduced during the reconstruction.

The voids in the reconstructed buildings and/or water bodies from the different approaches are currently fixed manually by users either editing the mesh or adding voxels to fill the voids. The present disclosure automatically fills the holes in the reconstructed buildings by using methods and systems for constructing models of buildings (and other structures) that are highly reflective. The present disclosure may present 3D reconstructions of buildings with smooth continuous surfaces without unnecessary holes or voids on the facades of the buildings.

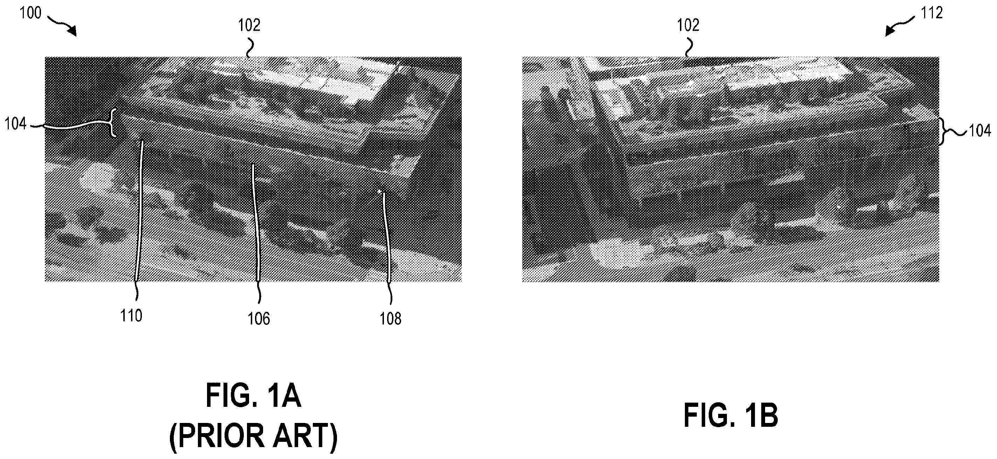

Referring now to Figure 1A, illustrated is an image 100 of a current 3D reconstruction of a building 102. The building 102 includes a facade 104 of reflective windows. The current 3D reconstruction of the building 102 produces large holes 106, 108, 110 in the facade 104 due to the reflective windows. As such, when the image 100 is presented, the 3D reconstruction of the building 102 is not accurate with missing textures from the building 102 creating voids (e.g., the holes 106, 108, 110) in the imagery of the facade 104.

Figure 1B illustrates an image 112 of a 3D reconstruction of the building 102 using the methods and systems of the present disclosure. The facade 104 of the building 102 is complete without holes or voids (e.g., the holes 106, 108, 110 in Figure 1A). In addition, the facade 104 of the building reflects the trees and street from the windows similar to how an individual would view the facade 104 of the building 102 if walking by the building 102. As such, the present disclosure smooths out the facade 104 and generates a more accurate representation of the building 102 in the 3D reconstruction of the building 102.

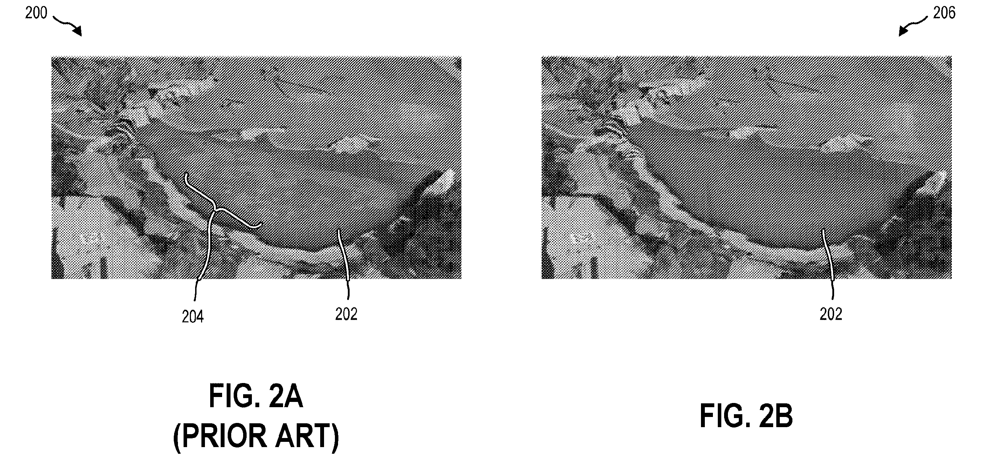

Figure 2A illustrates an example image 200 of a current 3D reconstruction of a body of water 202. The surface of the body of water 202 may be reflective, resulting in a large amounts of artificial spikes 204 in the surface of the water due to reflections or movement of the water. The spikes 204 may provide incorrect elevations of the body of water 202.

Figure 2B illustrates an example image 206 of a 3D reconstruction of the body of water 202 using the methods and systems of the present disclosure. The surface of the body of water 202 is flat without additional spikes or artifacts added to the surface of the water. As such, the image 206 may more accurately represent the body of water 202 in the 3D reconstruction.

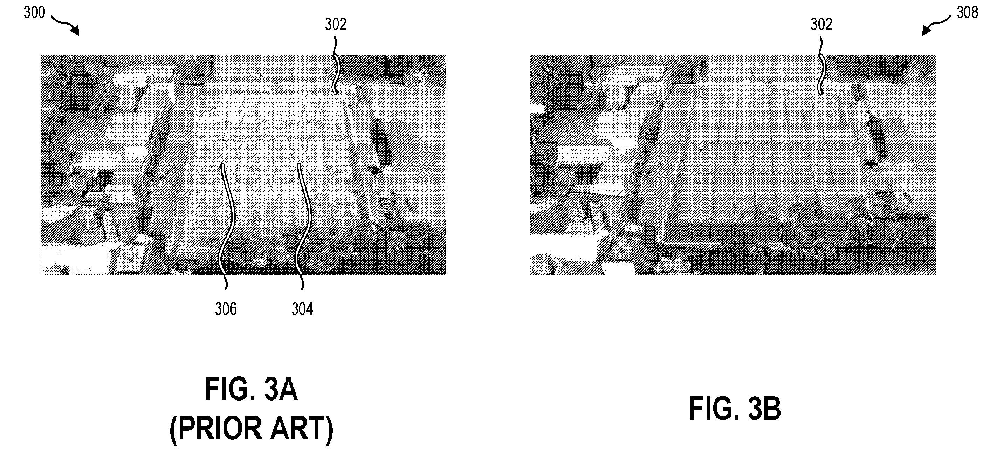

Figure 3A illustrates an image 300 of a current 3D reconstruction of a swimming pool 302. The surface of the swimming pool 302 may be reflective or moving, resulting in a plurality of holes (e.g., holes 304, 306) in the surface of the water based on the reflections or movement of the water. The holes may be presented in the surface of the water because imagery does not exist for those areas of the surface where the water reflected or moved. The surface of the swimming pool 302 may be presented with an uneven surface due to the holes in the surface. Moreover, information may be missing from the image 300 (e.g., the lane lines of the swimming pool 302) because of the holes in the 3D reconstruction of the swimming pool 302. As such, the current 3D reconstructions of bodies of water may decrease the quality of the reconstructions.

Figure 3B illustrates an example image 308 of a 3D reconstruction of the swimming pool 302 using the methods and systems of the present disclosure. The surface of the swimming pool 302 is complete without holes or voids in the surface of the water. As such, the image 308 may accurately represent the lane lines in the swimming pool 302 in the 3D reconstruction. Moreover, the surface of the swimming pool 302 may be smooth and continuous.

The present disclosure uses methods and systems to automatically apply a bias towards filled-space in footprints of features that may have non-Lambertian surfaces. The non-Lambertian surfaces may have interfered with imaging of the features (e.g., through reflections or moving surfaces), resulting in incorrect or incomplete imaging information for the features. The present disclosure may compensate when performing photogrammetric reconstruction of images with non-Lambertian surfaces for any interference caused by the non-Lambertian surfaces by applying a bias towards filled-space. Applying a bias towards filled-space in features that may have non-Lambertian surfaces may result in more accurate 3D reconstruction of the features.

The methods and systems may automatically apply a bias towards filled-space in footprints of features that may have non-Lambertian surfaces. Observation models may be generated for the features based on range-image estimates for the features. The methods and systems may determine whether the features are a building or water using a land-cover classification. In addition, the methods and systems may determine a footprint of the features and may generate a modified observation model with a bias towards filled-space within the footprint of the features. The methods and systems may apply a voxel reconstruction algorithm to the modified observation model to generate a three-dimensional (3D) reconstruction of the features. As such, many structures and water bodies may be correctly reconstructed automatically by applying a bias towards filled-space within the footprint of the features using the methods and systems of the present disclosure without a need for direct mesh editing.

In some implementations, a convolutional neural network (CNN) is used to first detect the footprints of buildings on orthographically rectified nadir imagery. The present disclosure may effectively use the building footprints that are shared with other products for determining footprints of the buildings. Once the footprint of the building is known, a height-field image (a height-field image is a raster-image where each pixel indicates the elevation at that point) is generated. All the building facades on the height-field image are detected through image processing using morphological operations (thresholded erosion residue). Finally, a total variation (TV)-L¹ voxel reconstruction algorithm is modified by biasing the areas of the voxel volume towards filled-space in the areas detected as building facades. The amount of biasing added is quadratically proportional to the change in elevation to allow for additional biasing for taller buildings where the problem can be worse. The amount of biasing is balanced to help ensure that most valid undercutting is still reconstructed while preventing most holes.

One technical advantage of some implementations of the present disclosure is providing a more realistic reconstruction of buildings and water bodies. In addition, the present disclosure allows the camera to be closer to the ground, resulting in an increase in images available for performing photogrammetric reconstruction. In addition, the present disclosure reduces spike artifacts in the reconstructions of the building and water bodies. Another technical advantage of some implementations of the present disclosure is improving an existing input (building footprint masks) that are shared among a plurality of applications or uses.

One use case of the present disclosure includes using the 3D reconstructions for flight simulators. Another use case of the present disclosure includes using the 3D reconstructions for augmented reality (AR) and/or virtual reality (VR) applications. Another use case of the present disclosure includes using the 3D reconstructions for mapping applications.

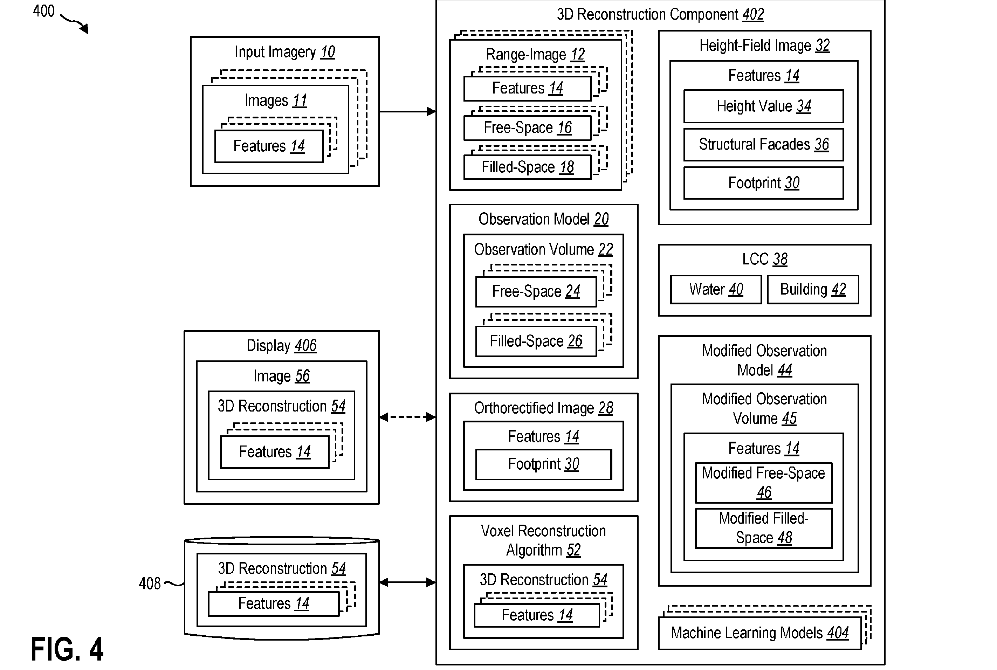

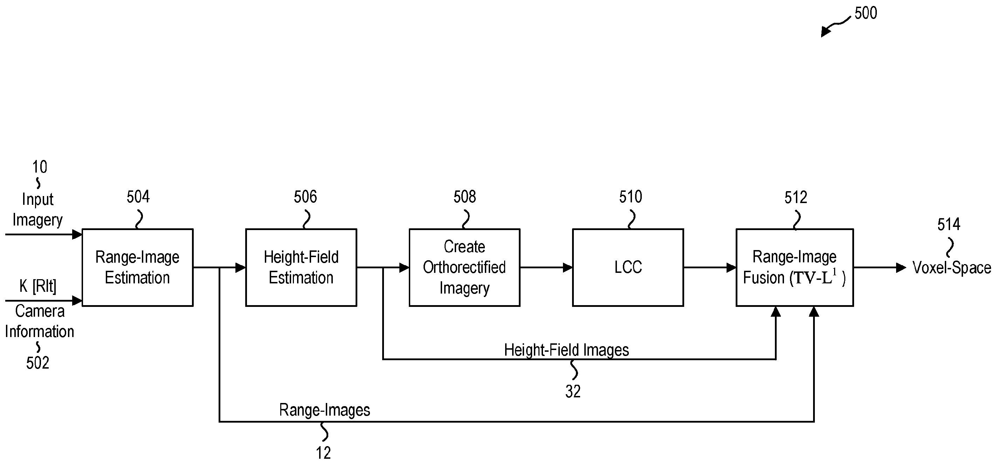

Referring now to Figure 4, illustrated is an example environment 400 for performing photogrammetric reconstruction of images 11 with non-Lambertian surfaces. Non-Lambertian surfaces include surfaces that are reflective, have moving features, and/or are featureless. Examples of non-Lambertian surfaces include, but are not limited to, water, windowed surfaces, and/or roof tiling. The environment 400 may include a 3D reconstruction component 402 that performs photogrammetric reconstruction of input imagery 10 with non-Lambertian surfaces. The 3D reconstruction component 402 may generate more realistic 3D reconstructions 54 of images 11 that include non-Lambertian surfaces by correctly reconstructing features 14 of the images 11 without holes or voids where the non-Lambertian surfaces are located in the reconstructed images. The 3D reconstructions 54 may also include smoother surfaces on the features 14 in the reconstructed images.

The 3D reconstruction component 402 may receive or access the input imagery 10. The input imagery 10 may capture images 11 of locations or regions throughout the world (e.g., cities, landscapes, water bodies, buildings, airports, amusement parks, etc.). The images 11 may include any aerial images, such as, but not limited to, the images 11 from cameras on airplanes, the images 11 from satellites, and/or the images 11 from cameras on unmanned aerial vehicles. One example of the images 11 incudes nadir images. In some implementations, the input imagery 10 includes hundreds or thousands of images 11 for a same location or region. Location-tracking sensors (e.g., global positioning system (GPS) sensors on the airplanes or unmanned aerial vehicles) may provide a location for the images 11. For example, an airplane flies over a city and cameras on the airplane capture images 11 of the city.

The input imagery 10 may include one or more features 14 within the images 11. Features 14 may include, but are not limited to, structures (e.g., buildings, houses, bridges, swimming pools, and/or other man-made objects) and/or natural objects (e.g., trees, mountains, bodies of water, etc.). As such, each image 11 of the input imagery 10 may have one or more features 14.

The 3D reconstruction component 402 may receive or access the input imagery 10 from one or more sources. One example includes the 3D reconstruction component 402 receiving or accessing the input imagery 10 from one or more of datastores of images 11. The one or more datastores may store the images 11 by regions of the world (e.g., one datastore for images 11 of Europe and a different datastore for images 11 of Africa). In addition, the one or more datastores may be from different content providers (e.g., one datastore for images 11 from a company and a different datastore of images 11 from a university).

The 3D reconstruction component 402 may generate range-images 12 for the images 11. The range-images 12 may be a synthetic image created by the 3D reconstruction component 402. The range-image 12 provides for every single pixel of the image 11, an estimation of whether the pixel is free-space 16 (e.g., a feature 14 is not located at the pixel) or filled-space 18 (e.g., a feature 14 is located at the pixel). The input imagery 10 may provide camera information with images 11, and the range-image 12 may use the camera information to estimate a distance from the camera to the first intersecting surface. The estimation of free-space 16 and/or filled-space 18 may be based on the distance. In an implementation, the range-image 12 is generated from oblique and nadir imagery, which estimates the distance of a ray traveling through the camera's optical center to a pixel of the first intersecting surface of the oblique and nadir imagery.

The 3D reconstruction component 402 may include one or more machine learning models 404 that perform different processing of the 3D reconstruction component 402. In an implementation, a machine learning model 404 generates the plurality of range-images 12 for the different locations or regions of the input imagery 10. The machine learning model 404 may generate a range-image 12 for each image 11 received from the input imagery 10. As such, one or more range-image 12 may be generated for the same location or region if a plurality of images 11 are received from the input imagery 10 for the location or the region. In an implementation, the 3D reconstruction component 402 receives a plurality of range-images 12 from one or more sources. For example, the 3D reconstruction component 402 accesses the range-images 12 from a plurality of datastores.

The plurality of range-images 12 may be used to generate one or more observation models 20. The observation models 20 include an observation volume 22 that generates for each voxel (e.g., x, y, z cartesian coordinates) of the images 11 whether the voxel is free-space 24 or filled-space 26 based on the range-images 12. In an implementation, the free-space 24 and/or filled-space 26 estimation is based on an aggregation of all the range-images 12 for the images 11. The observation volume 22 may have a histogram for every voxel that identifies how many range-images 12 estimated that the voxel is free-space 24 and how many range-images 12 estimated that the voxel is filled-space 26. As such, the histogram may be a collection of votes for free-space 24 (e.g., a total number of range-images 12 that indicated free-space 24) or filled-space 26 (e.g., total number of range-images 12 that indicated filled-space 26) for every pixel in the image 11.

Different observation models 20 may be generated for different locations or regions. For example, one observation model 20 is generated for a building located in Los Angeles, while a different observation model 20 is generated for Lake Michigan. In addition, different observation models 20 may be generated for the features 14 in the images 11. One example includes the observation model 20 is generated for a city in the image 11. Another example includes one observation model 20 is generated for a building in the image 11 and a different observation model 20 is generated for a highway in the same image 11.

The 3D-reconstruction component 402 may also generate one or more orthorectified images 28 of the features 14. The orthorectified images 28 may be used to identify a footprint 30 of each feature 14 in the images 11. Any footprint detection method may be used to identify the footprints 30. In an implementation, a machine learning model 404, such as a convolutional neural network (CNN), is used to detect the footprints 30 of the features 14 on orthographically rectified nadir imagery (the orthorectified images 28).

In addition, the 3D-reconstruction component 402 may use the range-images 12 to generate one or more height-field images 32. At least two range-images 12 may be used to create a height-field image 32. Each pixel in the height-field image 32 represents elevation for the pixel. As such, the height-field images 32 provide an estimation of height for every pixel. In an implementation, the height-field image 32 is a raster-image where each pixel indicates the elevation at that point. The height-field image 32 provides a height value 34 for one or more features 14 within the height-field image 32.

In addition, the height-field image 32 may be used to define a footprint 30 for the features 14. In an implementation, the orthorectified image 28 is used to identify the footprint 30 of the features 14. The footprint 30 may identify a region of the features 14 where the 3D reconstruction component 402 may modify or change the estimation of the filled-space 26 or free-space 24 for the feature 14 prior to the 3D reconstruction occurring on the feature 14. The estimations of the filled-space 26 or free-space 24 may remain unchanged for anything outside of the footprint 30 of the feature 14.

In an implementation, additional height-field images 32 are created based on the range-images 12. A hi-band height-field image may provide a highest possible estimated point at the different pixel locations for the features 14. In addition, a low-band height-field image may provide a lowest estimated point at the different pixel locations for the features 14. The additional height-field images 32 (e.g., the hi-band height-field image and the low-band-height-field image) may be used in defining the footprint 30 of the features 14.

The height-field images 32 may also be used to identify any structural facades 36 on the features 14. Image processing edge detection may be used to identify changes in elevation at an edge of the features 14. Facades are generally vertical surfaces, and thus, changes in elevation may indicate a structural facade 36. One example of image processing edge detection includes using morphological operations (thresholded erosion residue) to identify any structural facades 36 on the features 14. In an implementation, a machine learning model 404 generates the height-field images 32, determines the footprint 30 of the features 14, and/or identifies the one or more structural facades 36 of the features 14.

A land-cover classification (LCC) 38 may be applied to the height-field image 32 to determine whether the features 14 are buildings 42 or water 40. In an implementation, a trained machine learning model 404 determines whether the features 14 are buildings 42 or water 40. A visually distinct mask may be applied to the height-field images 32 to highlight or otherwise identify a location of the features 14 identified as buildings 42 or water 40. For example, a land-cover classification raster bit mask indicates if a pixel is classified into a type (e.g., buildings 42 or water 40).

If the features 14 are not water 40 or buildings 42, the 3D reconstruction of the features 14 may occur without any modifications to the observation model 20 of the features 14. As such, for features 14 that are not water 40 or buildings 42, such as, other man-made structures (e.g., bridges, cranes, water towers, etc.) and/or other natural occurring objects (e.g., trees or mountains), the 3D reconstructions of the features 14 may occur without any modifications to the observation model 20 for the features 14.

However, if the features 14 are water 40 or buildings 42, the 3D reconstruction component 402 may generate a modified observation model 44 for the features 14. The height-field images 32 may be used to generate the modified observation model 44. The modified observation model 44 may change the observation volume 22 for the footprint 30 of the features 14. The modified observation model 44 may apply a bias to the estimates of the free-space 24 and filled-space 26 in the observation volume 22 to generate a modified observation volume 45. The modified observation volume 45 may only modify the estimates of the free-space 24 and filled-space 26 within the footprint 30 of the features 14 without going above the features 14, below the features 14, and/or outside of the features 14. The observation volume 22 for the area outside of the footprint 30 of the features 14 identified as water 40 or a building 42 may remain the same (e.g., the free-space 24 and/or the filled-space 26 estimations remain unchanged).

The amount of biasing may be balanced to help ensure that most valid undercutting is still reconstructed while preventing most holes in the 3D reconstruction 54 of the features 14. The bias may increase the votes for filled-space 26 within the footprint 30 of the features 14. In addition, the bias may increase the votes for filled-space 26 for any identified structural facades 36 of the features 14. As such, the modified observation model 44 may generate modified free-space 46 with a decrease in the free-space 26 within the footprint 30 of the features 14 and may generate modified filled-space 48 with an increase in filled-space 26 within the footprint 30 of the features 14 and/or within any identified structural facades 36.

The bias may be proportional to the height value 34 of the features 14. For example, for a higher building 42, the amount of bias applied is higher relative to a lower building 42 (e.g., the amount of bias applied is less). In an implementation, the amount of biasing added is quadratically proportional to the change in elevation for the feature 14 to allow for additional biasing for taller buildings 42. The bias for water 40 may also include flattening a contiguous group of voxels and pixels marked as water 40 to a common elevation, resulting in a flat reconstruction of the water 40.

The modified observation model 44 may generate modified free-space 46 and/or modified filled-space 48 for the features 14 that are identified as water 40 or buildings 42 within the footprint 30 of the features 14. As such, the footprints 30 may define an area that where a bias towards filled-space may be automatically added to the observation histograms.

One example use case includes detecting large changes in elevation in a feature 14 and created walls of added filled-space votes (e.g., modified filled-space 48) in the modified observation model 44 for the feature 14 in the z-direction.

The 3D reconstruction component 402 may apply a voxel reconstruction algorithm 52 to the modified observation model 44 and may generate a 3D reconstruction 54 of the features 14. The voxel reconstruction algorithm 52 may be a surface denoising algorithm that smooths all observations of the different range-images 12 (e.g., the modified free-space 46 and the modified filled-space 48 from the modified observation model 44) to get a final surface for the 3D reconstruction 54 of the features 14. In an implementation, the voxel reconstruction algorithm 52 is a total variation (TV)-L¹ voxel reconstruction algorithm.

The biasing may influence the voxel reconstruction algorithm 52 to generate smooth surfaces for the features 14 in the 3D reconstruction 54. In addition, the biasing may influence the voxel reconstruction algorithm 52 to generate complete surfaces without unnecessary holes or voids in the features 14. As such, for features 14 with water 40, the 3D reconstruction 54 of the surface of the water 40 may be smooth and flat. In addition, for features 14 with buildings 42, the buildings 42 may have complete structural facades 36 without holes or voids where the structural facades 36 may have reflected during the imaging.

The 3D reconstruction component 402 may store the 3D reconstruction 54 of the feature 14 in one or more datastores 408. The datastores 408 may include a plurality of databases that store the 3D reconstructions 54 of the different features 14. The databases may store the 3D reconstructions 54 by location. For example, different features 14 (e.g., buildings, rivers, lakes) from the same city are stored together in one database. The databases may also store the 3D reconstructions 54 by types of features. For example, lakes may be stored together in one database while rivers are stored in a different database. Another example includes skyscrapers stored in one database while shopping malls are stored in a different database.

The datastores 408 may be accessed by a plurality of applications or services to use the 3D reconstructions 54 of the features 14. The 3D reconstruction 54 may be presented in an image 56 on a display 406 in communication with the 3D reconstruction component 402. For example, the image 56 is used in a mapping application on the device. The mapping application may access the datastores 408 to retrieve the 3D reconstructions 54 and present the 3D reconstructions 54 in the image 56. Another example includes using the 3D reconstruction 54 in a flight simulator game or application. Another example includes using the 3D reconstruction 54 in an augmented reality or virtual reality applications.

The environment 400 may have multiple machine learning models 404 running simultaneously. In some implementations, one or more computing devices are used to perform the processing of environment 400. The one or more computing devices may include, but are not limited to, server devices, personal computers, a mobile device, such as, a mobile telephone, a smartphone, a PDA, a tablet, or a laptop, and/or a non-mobile device. The features and functionalities discussed herein in connection with the various systems may be implemented on one computing device or across multiple computing devices. For example, the 3D reconstruction component 402 and/or the display 406 are implemented wholly on the same computing device. Another example includes one or more subcomponents of the 3D reconstruction component 402 implemented across multiple computing devices. Moreover, in some implementations, the one or more subcomponents of the 3D reconstruction component 402 are implemented or processed on different server devices of the same or different cloud computing networks.

In some implementations, each of the components of the environment 400 is in communication with each other using any suitable communication technologies. In addition, while the components of the environment 400 are shown to be separate, any of the components or subcomponents may be combined into fewer components, such as into a single component, or divided into more components as may serve a particular embodiment. In some implementations, the components of the environment 400 include hardware, software, or both. For example, the components of the environment 400 may include one or more instructions stored on a computer-readable storage medium and executable by processors of one or more computing devices. When executed by the one or more processors, the computer-executable instructions of one or more computing devices can perform one or more methods described herein. In some implementations, the components of the environment 400 include hardware, such as a special purpose processing device to perform a certain function or group of functions. In some implementations, the components of the environment 400 include a combination of computer-executable instructions and hardware.

The 3D reconstruction component 402 may generate more realistic 3D reconstructions 54 of images 11 that include non-Lambertian surfaces by correctly reconstructing features 14 of the images 11 without the need for direct mesh editing of the features 14. As such, the 3D reconstructions 54 appear without unnecessary holes or voids where the non-Lambertian surfaces are located in the images 11.

Referring now to Figure 5, illustrated is an example method 500 for photogrammetric reconstruction of images with non-Lambertian surfaces. The actions of the method 500 are discussed below with reference to the architecture of Figure 4 but may be applicable to other specific environments.

At 504, the method 500 includes generating range-image estimations on received input imagery 10 and camera information 502. The input imagery 10 may capture images 11 of locations or regions throughout the world (e.g., cities, landscapes, water bodies, buildings, airports, amusement parks, etc.). The images 11 may include any aerial images. One example of the images 11 is nadir images.

The camera information 502 may include the intrinsic camera matrix (K) with the focal length of the camera, where the principal point of the camera is located, any/or any skew of the camera. As such, the intrinsic camera matrix may describe the camera that took the picture. The camera information 502 may also include an extrinsic camera matrix with the rotation of the camera (R) and the translation of the camera (T). The camera information may be sent with the input imagery 10. In addition, the camera information may be associated with the input imagery 10. The 3D reconstruction component 402 may generate the range-image estimations for the images 11 included in the input imagery 10 based on the camera information 502. The range-image 12 may use the camera information to estimate a distance from the camera to the first intersecting surface. The estimation of free-space 16 and/or filled-space 18 may be based on the distance. The 3D reconstruction component 402 generates a plurality of range-images 12 with estimations for free-space 16 and filled-space 18 for the images 11. The range-image estimation may include semi-global matching of the input imagery 10.

At 506, the method 500 includes generating a height-field estimation. The height-field estimation may be derived from the range-image estimations. The 3D reconstruction component 402 may generate the height-field image 32 based on the rang-images 12. In an implementation, a plurality of height-field images 32 are generated. A general height-field image may provide an estimated height for every x, y cartesian coordinate in the input imagery images (e.g., images 11). The general height-field image may be a two-dimensional (2D) image that may be used to determine a height value 34 for one or more features 14 in the images 11, any structural facades 36 of the features 14, and/or a footprint 30 of the features 14. The structural facades 36 may be determined based on elevation changes at a particular point or edge of the features 14.

In addition, a hi-band height-field image may be generated. The hi-band height-field image may provide the highest estimated point of the features 14. As such, the hi-band height-field image may provide an estimated upper boundary or limit for a height of the footprint 30 for the features 14 (e.g., the features 14 do not extend past the highest estimated point).

A low-band field image may also be generated. The low-band field image may provide the lowest estimated point of the features 14. The low-band field image may provide an estimated lower boundary for the footprint 30 for the features 14 (e.g., the features 14 start at the lowest estimated point and do not extend below the lower boundary). The height-field estimations provided by the height-field image(s) 32 may be used to define a volume of the features 14.

At 508, the method 500 includes creating orthorectified imagery. The 3D reconstruction component 402 may use the height-field images 32 to create one or more orthorectified images 28. The orthorectified images 28 may be used to identify a footprint 30 of each feature 14 in the images 11. Any footprint detection method may be used to identify the footprints 30. In an implementation, a machine learning model 404, such as, a convolutional neural network (CNN) is used to detect the footprints 30 of the features 14 on orthographically rectified nadir imagery (the orthorectified images 28).

At 510, the method 500 includes performing a land-cover classification (LCC) on the orthorectified images 28. For example, a land-cover classification raster bit mask is applied to the orthorectified images 28 and indicates if a pixel is classified into a type, such as, a building 42 or water 40. The mask may be a different color to easily identify the features classified as a building 42 or water 40. As such, the LCC may be used to identify whether the features of the orthorectified images 28 are identified as buildings 42 or water 40.

At 512, the method 500 performs a range-image fusion. The range-images 12, the height-field images 32, and the LCC of the features 14 may be provided to a voxel reconstruction algorithm 52. The voxel reconstruction algorithm 52 may be a surface denoising algorithm that smooths all observations of the different range-images 12 (e.g., the free-space or filled-space from the range-image estimations) to get a final surface for the 3D reconstruction 54 of the features 14.

The 3D reconstruction component 402 may use the height-field images 32 and the LCC of the features 14 (e.g., water 40 or buildings 42) to modify the voxel reconstruction algorithm 52 by biasing the areas of the voxel volume towards filled-space in the features 14 detected as buildings 42 or water 40 and/or the areas detected as structural facades 36 in the features 14. In an implementation, the voxel reconstruction algorithm 52 is a total variation (TV)-L¹ voxel reconstruction algorithm that provides an L¹ norm, an absolute value between two different variables (e.g., the free-space or filled-space estimations from the range-image estimations).

At 514, the method 500 includes a 3D reconstruction 54 of the features 14 in the voxel-space. The voxel reconstruction algorithm 52 may generate a 3D reconstruction 54 of the features 14 based on the biasing. The 3D reconstruction 54 may present smooth, continuous surfaces of the features 14 without voids or holes in the structural facades 36 of the features 14. In addition, the 3D reconstructions 54 may present the surface of water 40 in the features 14 as flat and smooth without spike artifacts.

As such, the method 500 may be used to provide more realistic 3D reconstructions 54 of the features 14 included in the input imagery 10. The method 500 breaks the reconstruction into two steps to better utilize the results of the LCC.

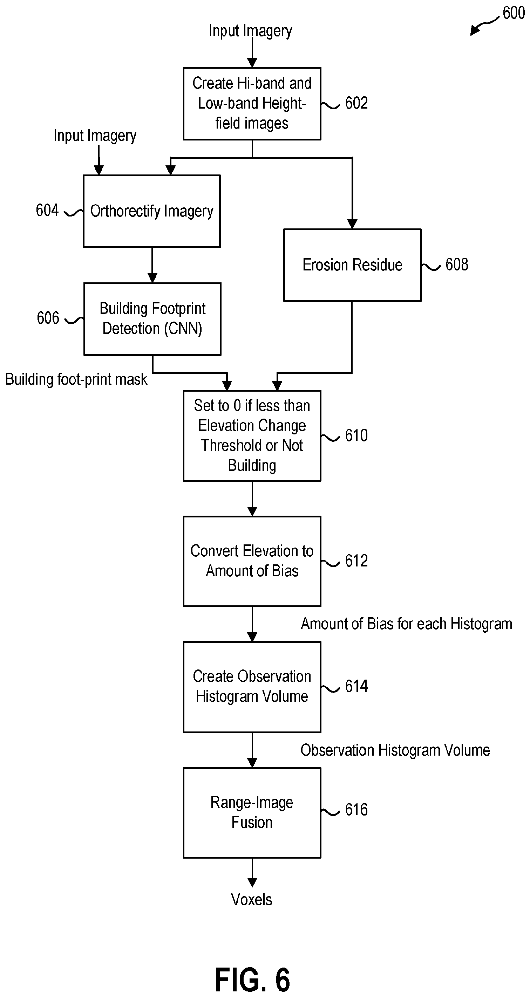

Referring now to Figure 6, illustrated is an example method 600 for creating a modified observation volume 45 of buildings 42 for use with photogrammetric reconstruction of images 11 with the buildings 42. The actions of the method 600 are discussed below with reference to the architecture of Figure 4 but may be applicable to other specific environments.

At 602, the method 600 includes receiving input imagery and creating hi-band and low-band height-field images. The input imagery 10 may include a plurality of images 11 for different regions or locations worldwide. The images 11 may include any aerial images (e.g., images 11 from cameras on airplanes, images 11 from satellites, and/or images 11 from cameras on unmanned aerial vehicles). In addition, the images 11 may include one or more buildings 42.

The 3D reconstruction component 402 may receive the input imagery 10 with the plurality of images 11 and may create hi-band and low-band height-field images for the plurality of images 11. The hi-band height-field image may provide the highest estimated point of the buildings 42 in the images 11 (e.g., a top or roof of the building 42). The low-band height-field image may provide a lowest estimated point for the building 42 (e.g., the ground floor or bottom of the building 42). If a plurality of buildings 42 are included in the image 11, the hi-band height-field images and the low-band height-field images may include highest and lowest estimations for each of the buildings 42.

At 604, the method 600 includes using the input imagery 10 and the hi-band and low-band height-field images to create orthorectified imagery. The 3D reconstruction component 402 may create one or more orthorectified images 28 with the buildings 42.

At 606, the method 600 includes performing a building footprint detection on the orthorectified images 28. The 3D reconstruction component 402 may use a convolutional neural network (CNN) to detect the building footprints 30 of the buildings 42 in the orthorectified images 28. The 3D reconstruction component 402 may apply a building footprint mask to the orthorectified images 28 based on the detected building footprints 30. In an implementation, the building footprint mask is a colored mask overlaid where the buildings 42 are detected in the orthorectified images 28.

At 608, the method 600 includes performing erosion residue on the hi-band and low-band height-field images. The 3D reconstruction component 402 may perform erosion residue edge detection processing on the hi-band and low-band height-field images to detect where edges occur on the buildings 42.

At 610, the method 600 includes determining whether the edges of the footprints the of the buildings 42 are less than an elevation change threshold. The 3D reconstruction component 402 may compare the estimated elevation change for the edges for the buildings 42 to an elevation change threshold (e.g., a minimum amount of elevation change needed to determine an amount of bias for the building 42 that may modify the estimation of free-space or filled-space for the building 42). The 3D reconstruction component 402 may also compare an estimated height for the buildings 42 to an elevation change threshold. If the estimated elevation change for the edges and/or the estimated height for the building is less than the elevation change threshold, the 3D reconstruction component 402 may set the bias to zero. In addition, if the detected footprint is not a building 42, the 3D reconstruction component 402 may set the bias to zero.

At 612, the method 600 includes converting the elevation to an amount of bias. If the estimated height for the edges and/or the estimated height for the building exceed the elevation change threshold, the 3D reconstruction component 402 may convert the elevation to an amount of bias. The amount of bias may be proportional to the estimated elevation change or the estimated height for the building 42. For example, the amount of bias is quadratically proportional to the change in elevation or the estimated height. Another example includes the amount of bias is directly proportional to the change in elevation or the estimated height. The amount of bias may be determined by any exponential function. In addition, the amount of bias may determine a number of additional votes or estimations to add for filled-space within the building 42.

At 614, the method 600 includes creating an observation histogram volume for the buildings 42. The 3D reconstruction component 402 may create a modified observation model 44 for the buildings 42 based on the amount of bias. The 3D reconstruction component 402 may modify the free-space 24 and/or the filled-space 26 estimates in the observation volume 22 for the buildings 42 provided by the observation model 20. The 3D reconstruction component 402 may generate a modified observation volume 45 with modified free-space 46 estimates and/or modified filled-space 48 estimates for the building based on the bias. The bias may increase the votes for the estimated filled-space 26 for the building 42 from the observation model 20 within the footprint 30 of the building 42. The bias may be proportional to the estimated height of the building 42. As such, the bias may apply more votes for filled-space 26 for taller buildings relative to the number of votes for filled-space 26 for a smaller number.

In addition, the bias may increase the votes for filled-space 26 on any detected structural facade 36 of the buildings 42. The structural facades 36 are more likely to cause reflections or other interferences with the imaging of the buildings 42 resulting in incomplete information where the reflection or interference occurred in the imaging. As such, the 3D reconstruction component 402 may more heavily weight the votes for filled-space 26 at the detected structural facade 36 to compensate for any incorrect estimations of the free-space or filled-space 26 of the structural facades 36 due to the missing or incomplete information from the images 11 at the location of the structural facades 36.

At 616, the method 600 includes performing range-image fusion. The 3D reconstruction component 402 may perform range-image fusion on the modified observation volume 45. The 3D reconstruction component 402 may apply a voxel reconstruction algorithm 52 on the modified observation volume 45 to generate a 3D reconstruction 54 of the buildings 42. The modified observation models 44 may bias the footprint 30 of the buildings 42 to filled-spaced so that when the buildings 42 are reconstructed by the voxel reconstruction algorithm 52, the 3D reconstruction 54 of the buildings 42 are weighted more towards filled-space for the footprints 30 of the buildings 42, resulting in 3D reconstructions 54 of the buildings 42 without unnecessary holes or voids in the buildings 42. The method 600 outputs voxels based on the modified observation volume 45.

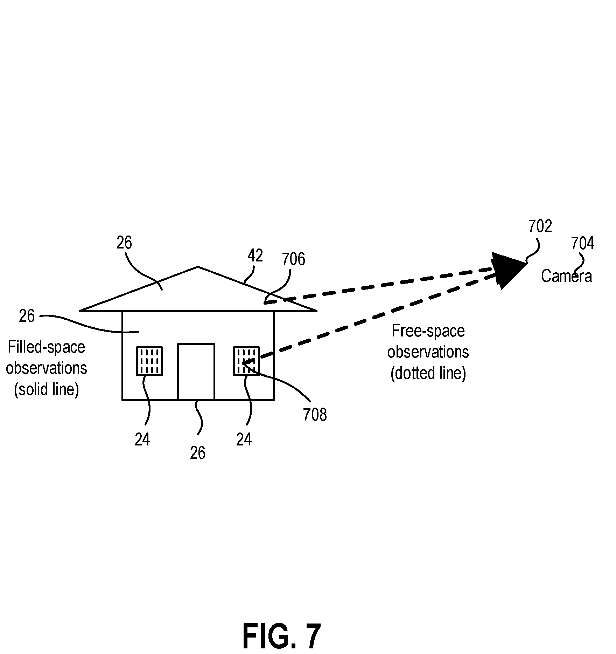

Referring now to Figure 7, illustrated is an example of creating an observation volume 22 for a building 42 (e.g., a house) for use with photogrammetric reconstruction of images 11. The features of Fig. 7 are discussed below with reference to the architecture of Figure 4 but may be applicable to other specific environments.

The 3D reconstruction component 402 may create a 3D observation volume 22 for the building 42. The observation volume 22 may include estimates for free-space 24 or filled-space 26 within the building 42. The filled-space 26 estimates are depicted as solid lines in the building 42 and the free-space 24 estimates are depicted as dashed lines in the building 42. The estimates for free-space 24 and/or filled-space 26 may be based on two or more range-images 12 for the building 42.

In addition, the estimates for the free-space 24 and the filled-space 26 may be based on a distance from pixels (e.g., point 706, point 708) of a ray traveling through the camera's 704 optical center 702. If the distance of the point (e.g., point 706, point 708) to the camera 704 is smaller than the estimate of the range-image 12, the point is free-space 24. If the distance of the point (e.g., point 706, point 708) is greater than the estimate of the range-image 12, the point is filled-space 26.

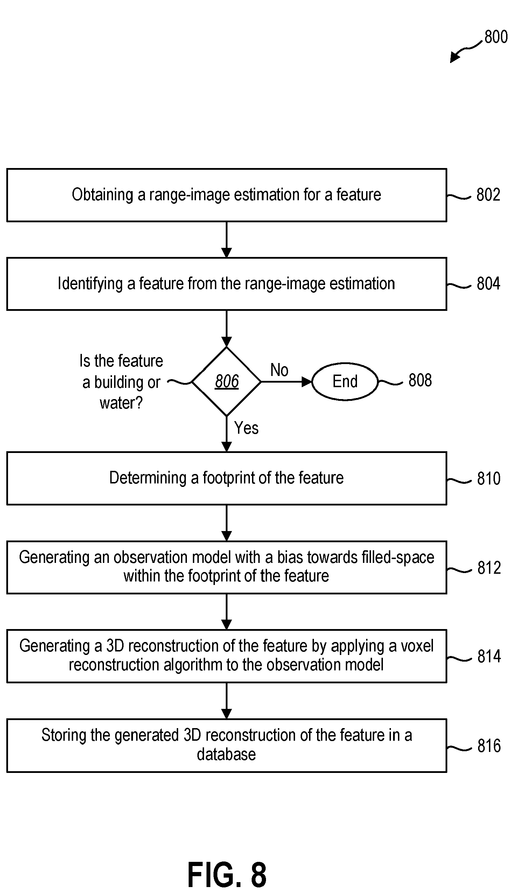

Referring now to Figure 8, illustrated is an example method 800 for constructing structural models (e.g., 3D reconstructions 54) of a non-Lambertian feature. A non-Lambertian feature may include surfaces that are reflective and/or surfaces that move. The actions of the method 800 are discussed below with reference to the architecture of Figure 4 but may be applicable to other specific environments.

At 802, the method 800 includes obtaining a range-image estimation for a feature. The 3D reconstruction component 402 may create the range-image 12. In addition, the 3D reconstruction component 402 may receive the range-image 12 from one or more sources (e.g., datastores with a plurality of range-images 12). The range-image 12 estimations provides for every pixel of an image 11, an estimation of whether the pixel is free-space 16 or filled-space 18. The images 11 may include any aerial images (e.g., images 11 from cameras on airplanes, images 11 from satellites, and/or images 11 from cameras on unmanned aerial vehicles). One example of the images 11 incudes nadir images. In some implementations, the images 11 include hundreds or thousands of photographs of a feature 14 (e.g., the same building 42 or the same body of water 40).

In an implementation, a machine learning model 404 generates the plurality of range-image 12 estimations for the images 11 with the feature 14. The estimations may be based on camera information received with the images 11. An example of the camera information includes an intrinsic camera matrix (K) with the focal length of the camera, where the principal point of the camera is located, any/or any skew of the camera. Another example of the camera information includes an extrinsic camera matrix with the rotation of the camera (R) and the translation of the camera (T). The range-image 12 may estimate a distance from the camera to the first intersecting surface and the estimation of the free-space 16 and/or the filled-space 18 may be based on the distance.

At 804, the method 800 includes identifying a feature from the range-image estimation. The 3D reconstruction component 402 may identify one or more features 14 from the range-images 12. The features 14 may be identified by the estimated filled-spaces 18 in range-images 12. The features 14 may include man-made structures (e.g., buildings, bridges, cranes, water towers, etc.) and/or other natural occurring objects (e.g., trees or mountains). In addition, the features 14 may include non-Lambertian features, such as, a building 42 with one or more reflective surfaces and/or water 40 with a reflective surface or a surface that moves.

At 806, the method 800 includes determining whether the feature is one of a building or water based on a land-cover classification. The land-cover classification 38 may be used to determine whether the feature 14 is a building 42 or a body of water 40. In an implementation, the 3D reconstruction component 402 uses a trained machine learning model 404 to determine whether feature 14 is a building 42 or a body of water 40. The land-cover classification 38 may be applied to a height-field image 32 of the feature 14. In addition, the land-cover classification 38 may be applied to orthorectified images 28 of the feature 14.

At 808, the method 800 ends if the feature 14 is not a building 42 or water 40. At 810, the method 800 includes determining a footprint of the feature if the feature is a building or water. The footprint 30 may be identified using an orthorectified image 28 of the feature 14. In addition, the footprint 30 may be determined using a height-field image 32 of the feature 14. Any footprint detection method may be used by the 3D reconstruction component 402 to identify the footprint 30 in the feature 14. In an implementation, a machine learning model 404, such as, a convolutional neural network (CNN) is used to detect the footprints 30 of the features 14 on orthographically rectified nadir imagery (the orthorectified images 28). The footprint 30 may identify a region where the 3D reconstruction component 402 may modify or change the estimation of the filled-space 26 or free-space 24 for the feature 14 prior to the 3D reconstruction occurring on the feature 14. The estimations of the filled-space 26 or free-space 24 may remain unchanged for anything outside of the footprint 30 of the feature 14.

At 812, the method 800 includes generating an observation model with a bias towards filled-space within the footprint of the feature. The 3D reconstruction component 402 may generate an observation model 20 for the range-image 12 estimations for the feature 14. The observation model 20 includes an observation volume 22 that generates for each voxel (e.g., x, y, z cartesian coordinates) of the images 11 whether the voxel is free-space 24 or filled-space 26 based on the range-images 12. The free-space 24 and/or filled-space 26 estimation is based on an aggregation of all the range-images 12 for the feature 14. The observation volume 22 may have a histogram for every voxel that identifies how many range-images 12 estimated that the voxel is free-space 24 and how many range-images 12 estimated that the voxel is filled-space 26. As such, the histogram may be a collection of votes for free-space 24 (e.g., a total number of range-images 12 that indicated free-space 24) or filled-space 26 (e.g., total number of range-images 12 that indicated filled-space 26) for every pixel in the image 11. The observation model 20 may apply a bias to the estimates of the free-space 24 and filled-space 26 in the observation volume 22 for the feature 14.

In an implementation, the 3D reconstruction component 402 generates a modified observation model 44 for the features 14. The height-field images 32 may be used to generate the modified observation model 44. The modified observation model 44 may change the observation volume 22 for the footprint 30 of the features 14. The modified observation model 44 may apply a bias to the estimates of the free-space 24 and filled-space 26 in the observation volume 22 for the feature 14 to generate a modified observation volume 45 for the feature 14. The modified observation model 44 may apply a bias towards filled-space 26 by analyzing the footprint 30 of the feature 14 and limiting the bias to within the footprint 30 of the feature 14. As such, the modified observation volume 45 may only modify the estimates of the free-space 24 and filled-space 26 within the footprint 30 of the features 14 without going outside of the feature 14. The observation volume 22 for the area outside of the footprint 30 of the features 14 identified as water 40 or a building 42 may remain the same (e.g., the free-space 24 and/or the filled-space 26 estimations remain unchanged).

The amount of bias may be proportional to the estimated elevation change or the estimated height for the feature 14. For example, the amount of bias is quadratically proportional to the change in elevation or the estimated height. Another example includes the amount of bias is directly proportional to the change in elevation or the estimated height. The amount of bias may be determined by any exponential function. In addition, the amount of bias may determine a number of additional votes or estimations to add for filled-space within the feature 14. The bias may increase the votes for the estimated filled-space 26 for the feature 14 from the observation model 20 within the footprint 30 of the feature 14. The bias may also decrease the votes for the estimated free-space 24 within the footprint 30 of the feature 14.

In addition, the bias may increase the votes for filled-space 26 on any detected structural facade 36 of the feature 14. The structural facades 36 are more likely to cause reflections or other interferences with the imaging of the feature 14 resulting in incomplete information where the reflection or interference occurred in the imaging. As such, the modified observation model 44 may more heavily weight the votes for filled-space at the detected structural facade 36 to compensate for any incorrect estimations of the free-space or filled-space of the structural facades 36 due to the missing or incomplete information from the images 11 at the location of the structural facades 36. As such, a bias toward filled-space 26 may be applied to the one or more structural facades 36. The modified observation model 44 may add filled-spaces where free-spaces existed in the observation model 20 for one or more non-Lambertian features (e.g., the structural facades 36) of the feature 14.

At 814, the method 800 includes generating a 3D reconstruction of the feature by applying a voxel reconstruction algorithm to the observation model. The 3D reconstruction component 402 may apply a voxel reconstruction algorithm 52 to the observation model 20 and may generate a 3D reconstruction 54 of the features 14. In an implementation, the 3D reconstruction component 402 applies the voxel reconstruction algorithm 52 to the modified observation model 44 and generates a 3D reconstruction 54 of the features 14. The voxel reconstruction algorithm 52 is a surface denoising algorithm that smooths all observations of the different range-images 12 (e.g., the free-space 16, the filled-space 18 from the observation model 20 and/or the modified free-space 46 and the modified filled-space 48 from the modified observation model 44) to get a final surface for the 3D reconstruction 54 of the features 14. In an implementation, the voxel reconstruction algorithm 52 is a total variation (TV)-L¹ voxel reconstruction algorithm.

The biasing may influence the voxel reconstruction algorithm 52 to generate smooth surfaces for the features 14 in the 3D reconstruction 54. In addition, the biasing may influence the voxel reconstruction algorithm 52 to generate complete surfaces without unnecessary holes or voids in the features 14. As such, for features 14 with water 40, the 3D reconstruction 54 of the surface of the water 40 may be smooth and flat. In addition, for features 14 with buildings 42, the buildings 42 may have complete structural facades 36 without holes or voids where the structural facades 36 may have reflected during the imaging.

At 816, the method 800 includes storing the generated 3D reconstruction of the feature in a database. The 3D reconstruction component 402 may store the 3D reconstruction 54 of the feature 14 in one or more datastores 408. The datastores 408 may include a plurality of databases that store the 3D reconstructions 54 of the different features 14. The databases may store the 3D reconstructions 54 by location. For example, different features 14 (e.g., buildings, rivers, lakes) from the same city are stored together in one database. The databases may store the 3D reconstructions 54 by types of features. For example, lakes may be stored together in one database while rivers are stored in a different database. Another example includes skyscrapers stored in one database while shopping malls are stored in a different database. The datastores 408 may be accessed by a plurality of applications or services to use the 3D reconstructions 54 of the features 14.

For example, the 3D reconstruction 54 may be presented in an image 56 on a display 406 in communication with the 3D reconstruction component 402 for use in a mapping application. The mapping application may access the datastores 408 and retrieve the 3D reconstruction 54 to present in the mapping application. Another example includes using the 3D reconstructions 54 in a flight simulator game or application. Another example includes using the 3D reconstructions 54 in an augmented reality or virtual reality applications.

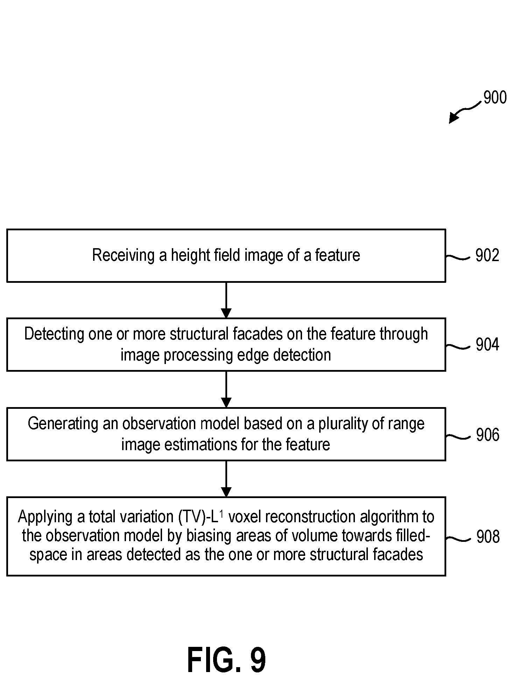

Referring now to Figure 9, illustrated is an example method 900 for constructing structural models (e.g., 3D reconstructions 54) of a non-Lambertian feature. A non-Lambertian feature may include surfaces that are reflective and/or surfaces that move. The actions of the method 900 are discussed below with reference to the architecture of Figure 4 but may be applicable to other specific environments.

At 902, the method 900 includes receiving a height-field image of a feature. The 3D reconstruction component 402 may generate a height-field image 32 for the feature 14. The height-field image 32 may provide an estimated height for every x, y cartesian coordinate in the feature 14. The height-field image 32 may be a two-dimensional (2D) image that is used to determine a height value 34 for the feature 14 in the images 11.

In addition, a hi-band height-field image may be generated. A hi-band height-field image may provide a highest possible estimated point at the different pixel locations for the features 14. In addition, a low-band height-field image may be generated and provides a lowest estimated point at the different pixel locations for the features 14. As such, the hi-band height-field image may provide a hi-band height-field estimation for the features 14 and the low-band height-field image may provide a low-band height-field estimation for the features 14.

At 904, the method 900 includes detecting one or more structural facades on the features through image processing edge detection. The height-field images 32 may be used to identify any structural facades 36 on the features 14. In addition, an orthorectified image 28 of the feature 14 may be used to identify any structural facades 36 on the features 14. Image processing edge detection may be used to identify changes in elevation at an edge of the features 14. Facades are generally vertical surfaces, and thus, changes in elevation may indicate a structural facade 36. For example, the image processing edge detection uses morphological operations (thresholded erosion residue) to identify any structural facades 36 on the features 14. In an implementation, a machine learning model 404 identifies the one or more structural facades 36 of the features.

At 906, the method 900 includes generating an observation model based on a plurality of range-image estimations for the feature. The height-field image 32 may be used to generate the modified observation model 44. The modified observation model 44 may change the observation volume 22 for the area of the features 14 identified by the height-field image 32. The modified observation model 44 may apply a bias to the estimates of the free-space 24 and filled-space 26 in the observation volume 22 to generate a modified observation volume 45.

The modified observation volume 45 may limit modifications to the observation models 20 estimates of the free-space 24 and filled-space 26 within the area of the footprint 30 of the features 14. The observation volume 22 for the area outside of the footprint 30 of the features 14 may remain the same (e.g., the free-space 24 and/or the filled-space 26 estimations remain unchanged). The footprint 30 of the feature 14 may be determined using the height-field images 32. In addition, the footprint 30 of the feature 14 may be determined using a convolutional neural network (CNN) to detect the footprint of the feature from an orthographically rectified nadir image.

The amount of biasing may be balanced to help ensure that most valid undercutting is still reconstructed while preventing most holes in the 3D reconstruction 54 of the features 14. The bias may increase the votes for filled-space 26 within the footprint 30 of the features 14. In addition, the bias may increase the votes for filled-space 26 for any identified structural facades 36 of the features 14. As such, the modified observation model 44 may generate modified free-space 46 with a decrease in the free-space within the footprint 30 of the features 14 and may generate modified filled-space 48 with an increase in filled-space within the footprint 30 of the features 14 and/or within any identified structural facades 36.

The modified observation model 44 may generate modified free-space 46 and/or modified filled-space 48 for the features 14 that are identified as water 40 or buildings 42 within the footprint 30 of the features 14. As such, the footprints 30 may define an area where a bias towards filled-space may be automatically added to the observation histograms.

At 908, the method 900 includes applying a total variation (TV)-L¹ voxel reconstruction algorithm to the observation model by biasing areas of volume towards filled-space in areas detected as the one or more structural facades. The biasing may influence the voxel reconstruction algorithm 52 to generate complete surfaces without unnecessary holes or voids in the features 14. As such, the buildings 42 may have complete structural facades 36 without holes or voids where the structural facades 36 may have reflected during the imaging.

The 3D reconstruction component 402 may apply the voxel reconstruction algorithm 52 to the modified observation model 44 and may generate a 3D reconstruction 54 of the features 14. The voxel reconstruction algorithm 52 may be a surface denoising algorithm that smooths all observations of the different range-images 12 (e.g., the modified free-space 46 and the modified filled-space 48 from the modified observation model 44) to get a final surface for the 3D reconstruction 54 of the features 14.

The method 900 may also include storing the modified observation model in a datastore. The 3D reconstruction component 402 may store the modified observation model 44 in one or more datastores 408. The datastores 408 may include a plurality of databases that store the modified observation models 44 of the different features 14.

As illustrated in the foregoing discussion, the present disclosure utilizes a variety of terms to describe features and advantages of the model evaluation system. Additional detail is now provided regarding the meaning of such terms. For example, as used herein, a "machine learning model" refers to a computer algorithm or model (e.g., a classification model, a binary model, a regression model, a language model, an object detection model) that can be tuned (e.g., trained) based on training input to approximate unknown functions. For example, a machine learning model may refer to a neural network (e.g., a convolutional neural network (CNN), deep neural network (DNN), recurrent neural network (RNN)), or other machine learning algorithm or architecture that learns and approximates complex functions and generates outputs based on a plurality of inputs provided to the machine learning model. As used herein, a "machine learning system" may refer to one or multiple machine learning models that cooperatively generate one or more outputs based on corresponding inputs. For example, a machine learning system may refer to any system architecture having multiple discrete machine learning components that consider different kinds of information or inputs.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various implementations.

Computer-readable mediums may be any available media that can be accessed by a general purpose or special purpose computer system. Computer-readable mediums that store computer-executable instructions are non-transitory computer-readable storage media (devices). Computer-readable mediums that carry computer-executable instructions are transmission media. Thus, by way of example, and not limitation, implementations of the disclosure can comprise at least two distinctly different kinds of computer-readable mediums: non-transitory computer-readable storage media (devices) and transmission media.

As used herein, non-transitory computer-readable storage mediums (devices) may include random access memory (RAM), read-only memory (ROM), electrically erasable programmable read-only memory (EEPROM), compact disc read-only memory (CD-ROM), solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

The steps and/or actions of the methods described herein may be interchanged with one another without departing from the scope of the claims. In other words, unless a specific order of steps or actions is required for proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a database, a datastore, or another data structure), ascertaining and the like. Also, "determining" can include receiving (e.g., receiving information), accessing (e.g., accessing data in a memory) and the like. Also, "determining" can include resolving, selecting, choosing, establishing, predicting, inferring, and the like.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional implementations that also incorporate the recited features. For example, any element described in relation to an embodiment herein may be combinable with any element of any other embodiment described herein. Numbers, percentages, ratios, or other values stated herein are intended to include that value, and also other values that are "about" or "approximately" the stated value, as would be appreciated by one of ordinary skill in the art encompassed by implementations of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the implementations that falls within the meaning and scope of the claims is to be embraced by the claims.

### INDUSTRIAL APPLICABILITY

The present disclosure is related to methods and systems for automatically applying a bias towards filled-space in footprints of features that may have non-Lambertian surfaces. The non-Lambertian surfaces may have interfered with imaging of the features (e.g., through reflections or moving surfaces), resulting in incorrect or incomplete imaging information for the features. Non-Lambertian surfaces include surfaces that are reflective, have moving features, and/or are featureless. Examples of non-Lambertian surfaces include water, windowed surfaces, and/or roof tiling.

The methods and systems automatically apply a bias towards filled-space for features that may have non-Lambertian surfaces when performing photogrammetric reconstruction of images with the features. Observation models are generated for the features based on range-image estimates for the features. A determination is made whether the features are a building or water using a land-cover classification. In addition, the footprint of the features is determined. The footprint of the features classified as a building or water is used to generate a modified observation model with a bias towards filled-space within the footprint of the features. A voxel reconstruction algorithm is applied to the modified observation model to generate a three-dimensional (3D) reconstruction of the features. As such, many structures and water bodies may be correctly reconstructed automatically by applying a bias towards filled-space within the footprint of the features using the methods and systems without a need for direct mesh editing of the 3D reconstruction of the features.

In some implementations, a CNN is used to first detect the footprints of the features on orthographically rectified nadir imagery. Once the footprint of the features is known, a height-field image (a height-field image is a raster-image where each pixel indicates the elevation at that point) is generated. Structural facades on the height-field images are detected through image edge processing. An example image edge processing includes using morphological operations (thresholded erosion residue). A total variation (TV)-L¹ voxel reconstruction algorithm is modified by biasing the areas of the voxel volume towards filled-space in the areas detected as structural facades. For example, the amount of biasing added is quadratically proportional to the change in elevation. The amount of biasing is balanced to help ensure that most valid undercutting is still reconstructed while preventing most holes.

One technical advantage of some implementations of the present disclosure is providing a more realistic reconstructions of buildings and water bodies. In addition, implementations of the present disclosure allow the camera to be closer to the ground, resulting in an increase in images available for performing photogrammetric reconstruction. In addition, the present disclosure reduces spike artifacts in the reconstructions of the building and water bodies. Another technical advantage of some implementations of the present disclosure is improving an existing input (building footprint masks) that are shared among a plurality of applications or uses.

The described implementations are to be considered as illustrative and not restrictive. The scope of the disclosure is, therefore, indicated by the appended claims rather than by the foregoing description. Changes that come within the meaning and range of the claims are to be embraced within their scope.

## Claims

1. A computer-implemented method for constructing structural models of a non-Lambertian feature, comprising:
obtaining (802) a range-image estimation with an estimation of free-space and filled-space;
identifying (804) a feature from the range-image estimation;
the method being **characterized in that** it further comprises:
determining (806) whether the feature is one of a building or water based on a land-cover classification;
in accordance with a determination that the feature is a building or water:
determining (810) a footprint of the feature;
generating (812) an observation model with a bias towards filled-space within the footprint of the feature;
generating (814) a three-dimensional, 3D, reconstruction of the feature by applying a voxel reconstruction algorithm to the observation model; and
storing (816) the generated 3D reconstruction of the feature in a database.

2. The method of claim 1, wherein the observation model includes an observation volume that aggregates a plurality of range-image estimations of the free-space and the filled- space for the feature.

3. The method of any of claims 1-2, wherein the observation model includes filled- spaces where free-spaces existed in the range-image estimations for one or more non- Lambertian features of the feature.

4. The method of any of claims 1-3, further comprising: receiving (902) a height field image with the feature, wherein the bias towards filled-space is determined by a height value of the feature.

5. The method of claim 4, wherein the bias toward filled-space is proportional to the height value.

6. The method of any of claims 1-5, wherein the bias toward filled-space is determined by analyzing the footprint of the feature.

7. The method of any of claims 1-6, further comprising: determining whether the generated observation model includes one or more facades, wherein the bias toward filled-space is applied to the one or more facades.

8. The method of claim 7, wherein determining whether the generated observation model includes the one or more facades further includes: analyzing a received height field image using image processing edge detection.

9. The method of claim 7, wherein determining whether the generated observation model includes one or more facades includes analyzing the footprint of the feature.

10. The method of any of claims 1-9, wherein determining the footprint of the feature is based on an orthorectified image of the feature.

11. The method of any of claims 1-10, wherein one or more machine learning models perform one or more of the estimation of free-space and filled-space for a feature, generating the observation model, determining whether the feature is a building or water, or applying the voxel reconstruction algorithm.

12. The method of any of claims 1-11, further comprising: presenting the 3D reconstruction of the feature in an image.

13. A system, comprising: one or more processors; memory in electronic communication with the one or more processors; and instructions stored in the memory, the instructions executable by the one or more processors to:
obtain (802) a range-image estimation with an estimation of free-space and filled-space;
identify (804) a feature from the range-image estimation;
the system being **characterized in that** the instructions are further executable by the one or more processors to:
determine (806) whether the feature is one of a building or water based on a landcover classification;
in accordance with a determination that the feature is a building or water:
determine (810) a footprint of the feature;
generate (812) an observation model with a bias towards filled-space within the footprint of the feature;
generate (814) a three-dimensional, 3D, reconstruction of the feature by applying a voxel reconstruction algorithm to the observation model; and
store (816) the generated 3D reconstruction of the feature in a database.

## Patentansprüche

1. Ein computerimplementiertes Verfahren zum Konstruieren von Strukturmodellen eines Nicht-Lambert'schen Merkmals, beinhaltend:
Erhalten (802) einer Entfernungsbildschätzung mit einer Schätzung von freiem Raum und gefülltem Raum;
Identifizieren (804) eines Merkmals aus der Entfernungsbildschätzung;
wobei das Verfahren **dadurch gekennzeichnet ist, dass** es ferner Folgendes beinhaltet:
Bestimmen (806), ob das Merkmal eines von einem Gebäude oder Wasser ist, basierend auf einer Landbedeckungsklassifikation;
in Übereinstimmung mit einer Bestimmung, dass das Merkmal ein Gebäude oder Wasser ist:
Bestimmen (810) eines Umrisses des Merkmals;
Erzeugen (812) eines Beobachtungsmodells mit einer Tendenz zugunsten von gefülltem Raum innerhalb des Umrisses des Merkmals;
Erzeugen (814) einer dreidimensionalen, 3-D, Rekonstruktion des Merkmals durch Anwenden eines Voxelrekonstruktionsalgorithmus auf das Beobachtungsmodell; und
Speichern (816) der erzeugten 3-D-Rekonstruktion des Merkmals in einer Datenbank.

2. Verfahren gemäß Anspruch 1, wobei das Beobachtungsmodell ein Beobachtungsvolumen umfasst, das eine Vielzahl von Entfernungsbildschätzungen des freien Raums und des gefüllten Raums für das Merkmal zusammenfasst.

3. Verfahren gemäß einem der Ansprüche 1-2, wobei das Beobachtungsmodell gefüllte Räume umfasst, wo in den Entfernungsbildschätzungen für ein oder mehrere Nicht-Lambert'sche Merkmale des Merkmals freie Räume bestanden.

4. Verfahren gemäß einem der Ansprüche 1-3, ferner beinhaltend: Empfangen (902) eines Höhenfeldbildes mit dem Merkmal, wobei die Tendenz zugunsten von gefülltem Raum durch einen Höhenwert des Merkmals bestimmt wird.

5. Verfahren gemäß Anspruch 4, wobei die Tendenz zugunsten von gefülltem Raum proportional zu dem Höhenwert ist.

6. Verfahren gemäß einem der Ansprüche 1-5, wobei die Tendenz zugunsten von gefülltem Raum durch Analysieren des Umrisses des Merkmals bestimmt wird.

7. Verfahren gemäß einem der Ansprüche 1-6, ferner beinhaltend: Bestimmen, ob das erzeugte Beobachtungsmodell eine oder mehrere Fassaden umfasst, wobei die Tendenz zugunsten von gefülltem Raum auf die eine oder die mehreren Fassaden angewandt wird.

8. Verfahren gemäß Anspruch 7, wobei das Bestimmen, ob das erzeugte Beobachtungsmodell die eine oder die mehreren Fassaden umfasst, ferner Folgendes umfasst: Analysieren eines empfangenen Höhenfeldbildes unter Verwendung von Bildverarbeitungskantenerkennung.

9. Verfahren gemäß Anspruch 7, wobei das Bestimmen, ob das erzeugte Beobachtungsmodell eine oder mehrere Fassaden umfasst, das Analysieren des Umrisses des Merkmals umfasst.

10. Verfahren gemäß einem der Ansprüche 1-9, wobei das Bestimmen des Umrisses des Merkmals auf einem orthokorrigierten Bild des Merkmals basiert.

11. Verfahren gemäß einem der Ansprüche 1-10, wobei ein oder mehrere Modelle für maschinelles Lernen eine oder mehrere der Schätzung von freiem Raum und gefülltem Raum für ein Merkmal durchführen, wobei sie das Beobachtungsmodell erzeugen, bestimmen, ob das Merkmal ein Gebäude oder Wasser ist, oder den Voxelrekonstruktionsalgorithmus anwenden.

12. Verfahren gemäß einem der Ansprüche 1-11, ferner beinhaltend: Darstellen der 3-D-Rekonstruktion des Merkmals in einem Bild.

13. Ein System, beinhaltend: einen oder mehrere Prozessoren; Speicher in elektronischer Kommunikation mit dem einen oder den mehreren Prozessoren; und in dem Speicher gespeicherte Befehle, wobei die Befehle durch den einen oder die mehreren Prozessoren ausführbar sind, um:
eine Entfernungsbildschätzung mit einer Schätzung von freiem Raum und gefülltem Raum zu erhalten (802);
ein Merkmal aus der Entfernungsbildschätzung zu identifizieren (804);
wobei das System **dadurch gekennzeichnet ist, dass** die Befehl ferner durch den einen oder die mehreren Prozessoren ausführbar sind, um:
basierend auf einer Landbedeckungsklassifikation zu bestimmen (806), ob das Merkmal eines von einem Gebäude oder Wasser ist;
in Übereinstimmung mit einer Bestimmung, dass das Merkmal ein Gebäude oder Wasser ist:
einen Umriss des Merkmals zu bestimmen (810);
ein Beobachtungsmodell zu erzeugen (812) mit einer Tendenz zugunsten von gefülltem Raum innerhalb des Umrisses des Merkmals;
durch Anwenden eines Voxelrekonstruktionsalgorithmus auf das Beobachtungsmodell eine dreidimensionale, 3-D, Rekonstruktion des Merkmals zu erzeugen (814); und
die erzeugte 3-D-Rekonstruktion des Merkmals in einer Datenbank zu speichern (816).

## Revendications

1. Un procédé mis en œuvre par ordinateur pour construire des modèles structuraux d'une caractéristique non lambertienne, comprenant :
le fait d'obtenir (802) une estimation d'image télémétrique avec une estimation d'espace libre et d'espace occupé ;
le fait d'identifier (804) une caractéristique à partir de l'estimation d'image télémétrique ;
le procédé étant **caractérisé en ce qu'**il comprend en outre :
le fait de déterminer (806) si la caractéristique est soit un bâtiment, soit de l'eau, sur la base d'une classification de couverture terrestre ;
en fonction d'une détermination que la caractéristique est un bâtiment ou de l'eau :
le fait de déterminer (810) un encombrement au sol de la caractéristique ;
le fait de générer (812) un modèle d'observation avec un biais envers un espace occupé au sein de l'encombrement au sol de la caractéristique ;
le fait de générer (814) une reconstruction tridimensionnelle, 3D, de la caractéristique en appliquant un algorithme de reconstruction en voxels au modèle d'observation ; et
le fait de stocker (816) la reconstruction 3D générée de la caractéristique dans une base de données.

2. Le procédé de la revendication 1, dans lequel le modèle d'observation inclut un volume d'observation qui agrège une pluralité d'estimations d'image télémétrique de l'espace libre et de l'espace occupé pour la caractéristique.

3. Le procédé de n'importe lesquelles des revendications 1 à 2, dans lequel le modèle d'observation inclut des espaces occupés où des espaces libres existaient dans les estimations d'image télémétrique pour une ou plusieurs caractéristiques non lambertiennes de la caractéristique.

4. Le procédé de n'importe lesquelles des revendications 1 à 3, comprenant en outre : le fait de recevoir (902) une image de champ de hauteur avec la caractéristique, dans lequel le biais envers l'espace occupé est déterminé par une valeur de hauteur de la caractéristique.

5. Le procédé de la revendication 4, dans lequel le bais envers l'espace occupé est proportionnel à la valeur de hauteur.

6. Le procédé de n'importe lesquelles des revendications 1 à 5, dans lequel le biais envers l'espace occupé est déterminé en analysant l'encombrement au sol de la caractéristique.

7. Le procédé de n'importe lesquelles des revendications 1 à 6, comprenant en outre : le fait de déterminer si le modèle d'observation généré inclut une ou plusieurs façades, dans lequel le biais envers l'espace occupé est appliqué aux une ou plusieurs façades.

8. Le procédé de la revendication 7, dans lequel le fait de déterminer si le modèle d'observation généré inclut les une ou plusieurs façades inclut en outre : le fait d'analyser une image de champ de hauteur reçue en recourant à une détection d'arêtes par traitement d'image.

9. Le procédé de la revendication 7, dans lequel le fait de déterminer si le modèle d'observation généré inclut une ou plusieurs façades inclut le fait d'analyser l'encombrement au sol de la caractéristique.

10. Le procédé de n'importe lesquelles des revendications 1 à 9, dans lequel le fait de déterminer l'encombrement au sol de la caractéristique est basé sur une image orthorectifiée de la caractéristique.

11. Le procédé de n'importe lesquelles des revendications 1 à 10, dans lequel un ou plusieurs modèles d'apprentissage machine effectuent une ou plusieurs actions parmi l'estimation d'espace libre et d'espace occupé pour une caractéristique, le fait de générer le modèle d'observation, le fait de déterminer si la caractéristique est un bâtiment ou de l'eau, le fait d'appliquer l'algorithme de reconstruction en voxels.

12. Le procédé de n'importe lesquelles des revendications 1 à 11, comprenant en outre : le fait de présenter la reconstruction 3D de la caractéristique dans une image.

13. Un système, comprenant : un ou plusieurs processeurs ; une mémoire en communication électronique avec les un ou plusieurs processeurs ; et des instructions stockées dans la mémoire, les instructions étant exécutables par les un ou plusieurs processeurs pour :
obtenir (802) une estimation d'image télémétrique avec une estimation d'espace libre et d'espace occupé ;
identifier (804) une caractéristique à partir de l'estimation d'image télémétrique ;
le système étant **caractérisé en ce que** les instructions sont en outre exécutables par les un ou plusieurs processeurs pour :
déterminer (806) si la caractéristique est soit un bâtiment, soit de l'eau, sur la base d'une classification de couverture terrestre ;
en fonction d'une détermination que la caractéristique est un bâtiment ou de l'eau :
déterminer (810) un encombrement au sol de la caractéristique ;
générer (812) un modèle d'observation avec un biais envers un espace occupé au sein de l'encombrement au sol de la caractéristique ;
générer (814) une reconstruction tridimensionnelle, 3D, de la caractéristique en appliquant un algorithme de reconstruction en voxels au modèle d'observation ; et
stocker (816) la reconstruction 3D générée de la caractéristique dans une base de données.
